## Europäisches Patentamt
## European Patent Office
## Office européen des brevets

(19)

(11) Veröffentlichungsnummer : **0 040 720**
**B1**

(12)

# EUROPÄISCHE PATENTSCHRIFT

(45) Veröffentlichungstag der Patentschrift :
02.01.86

(51) Int. Cl.⁴ : **C 08 G 18/54, C 08 G 12/32**

(21) Anmeldenummer : **81103416.4**

(22) Anmeldetag : **06.05.81**

(54) **Verfahren zur Herstellung von mit Melamin-Formaldehyd-Vorkondensaten modifizierten Polyurethanschaumstoffen.**

(30) Priorität : **27.05.80 DE 3020091**

(43) Veröffentlichungstag der Anmeldung :
**02.12.81 Patentblatt 81/48**

(45) Bekanntmachung des Hinweises auf die Patenterteilung : **02.01.86 Patentblatt 86/01**

(84) Benannte Vertragsstaaten :
**AT BE CH DE FR GB LI SE**

(56) Entgegenhaltungen :
**DE-A- 2 634 417**
**US-A- 3 135 707**
**US-A- 4 139 501**
**Chemical Abstracts, Band 92, Nr. 10, 10. März 1980 Columbus, Ohio, USA K. TOSHIAKI et al. "Stabilized polyol compositions" Seite 37, Spalte 1, Abstract Nr. 77432z**

(73) Patentinhaber : **BASF Aktiengesellschaft**
**Carl-Bosch-Strasse 38**
**D-6700 Ludwigshafen (DE)**

(72) Erfinder : **Hahn, Klaus, Dr.**
**Burggasse 2**
**D-6840 Lampertheim (DE)**
Erfinder : **Horn, Peter, Dr.**
**Neue Stuecker 15**
**D-6900 Heidelberg (DE)**
Erfinder : **Marx, Matthias, Dr.**
**Seebacher Strasse 49**
**D-6702 Bad Duerkheim (DE)**
Erfinder : **Weber, Heinz, Dr.**
**Am Wehrhaus 26**
**D-6718 Gruenstadt (DE)**
Erfinder : **Weiss, Wolfram, Dr.**
**Am Speyerweg 40**
**D-6704 Mutterstadt (DE)**
Erfinder : **Wurmb, Rolf, Dr.**
**Kastellweg 10**
**D-6900 Heidelberg (DE)**

**Beschreibung**

Die Erfindung betrifft ein Verfahren zur Herstellung von Polyurethanschaumstoffen, insbesondere Polyurethanhartschaumstoffen, durch Umsetzung von organischen Polyisocyanaten, Polyolen und Melamin-Formaldehyd-Vorkondensaten sowie gegebenenfalls Kettenverlängerungs- oder Vernetzungsmitteln in Gegenwart von Treibmitteln, Katalysatoren und gegebenenfalls Hilfsmitteln und Zusatzstoffen.

Die Herstellung von Polyurethanschaumstoffen aus Polyisocyanaten, Polyolen, gegebenenfalls Kettenverlängerungsmitteln, Hilfs- und Zusatzstoffen ist aus zahlreichen Patent- und Literaturveröffentlichungen bekannt. Verweisen möchten wir beispielsweise auf die Monographien von J. H. Saunders und K. C. Frisch, High Polymers, Band XVI « Polyurethanes » Teil I und II (Verlag Interscience Publishers, New York) und R. Vieweg und A. Höchtlen, Kunststoff-Handbuch, Band VII, Polyurethane, Carl Hanser Verlag, München.

Melamin-Formaldehyd-Vorkondensate werden üblicherweise durch Kondensation von Melamin mit Formaldehyd in verschiedenen Molverhältnissen in wäßriger Lösung bei pH-Werten größer als 7 und bei erhöhten Temperaturen hergestellt. Dabei wird das durch die Cannizzaro-Reaktion des Formaldehyds hervorgerufene Absinken des pH-Wertes während der Kondensation durch ständige Zugabe von Lauge ausgeglichen ; man kann jedoch auch in Gegenwart geeigneter Puffersysteme kondensieren. Die Kondensation wird fortgesetzt, bis der gewünschte Kondensationsgrad erreicht ist und durch Abkühlen abgebrochen, wobei man berücksichtigen muß, daß während der Abkühlung die Reaktion noch andauert.

Als Maß für den Kondensationsgrad wird die Verdünnbarkeit der Harzlösung mit Wasser benutzt, ausgedrückt als die Wassermenge, die einer Volumeneinheit Harzlösung gewöhnlicher Konzentration (d. h. 40 bis 85 %ig) bei 20 °C zugesetzt werden kann, ohne eine bleibende Trübung hervorzurufen.

Wäßrige Melamin-Formaldehyd-Harzlösungen, deren Kondensation unterbrochen wurde, sind nur begrenzt haltbar. beim Stehenlassen bzw. Bei der Lagerung schreitet die Kondensation fort und steigt die Viskosität an ; schließlich scheiden sich unlösliche Verbindungen aus und die Harzlösungen werden für die Weiterverarbeitung unbrauchbar. Als Lagerstabilität oder Haltbarkeit einer Harzlösung wird der Zeitraum in Tagen angegeben, innerhalb dessen eine gegebenenfalls auftretende Eintrübung nicht zur Phasentrennung führt und auch keine wesentlichen Änderungen ihrer Eigenschaften, z. B. der Viskosität erfährt. Die Lagerstabilität wird meist auf 20 °C bezogen.

Im Gegensatz zu Harnstoff-Formaldehyd-Vorkondensatlösungen, die gewöhnlich gut stabilisiert werden können, sind nach den bekannten Verfahren nur kurz haltbare Melamin-Formaldehyd-Vorkondensatlösungen zu erhalten, wobei die Stabilität der Lösung vom Formaldehyd-Gehalt, dem Kondensationsgrad und dem pH-Wert abhängig ist.

Zur Verbesserung der Lagerstabilität wurde vorgeschlagen, die Melamin-Formaldehyd-Vorkondensate mit niedermolekularen Alkoholen ganz oder teilweise zu veräthern oder den Harzlösungen Zusatzstoffe einzuverleiben. Beschrieben ist beispielsweise der Zusatz von Toluolsulfonamid in Kombination mit Alkoholen (US-PS 3 159 593), Saccharose (DE-OS 1 420 605) oder Saccharose in Kombination mit Toluolsulfonamid (DE-OS 1 420 606), aliphatischen Nitroverbindungen (US-PS 3 131 157), Dicyandiamid in Gegenwart von Alkoholen und Guanidiniumsalzen (DE-AS 1 144 006), Bis-(β-cyanoäthyl)amin (DE-OS 2 155 104). Diese Mittel müssen meist in verhältnismäßig hohen Mengen zugesetzt werden, damit sich die gewünschte Wirkung einstellt und sind nur für solche Vorkondensatlösungen erprobt bzw. bekannt, die einen hohen Formaldehyd-Anteil (d. h. Melamin-Formaldehyd-Molverhältnisse von 1 zu größer als 2) aufweisen.

Partiell und vollständig verätherte Methylolmelamine werden nach Angaben der US-PS 41 39 501 und der US-PS 3 135 707 als flammhemmende Zusätze zur Herstellung von Polyurethanschaumstoffen verwendet. Nachteilig an den beschreibenen Verfahren ist u. a., daß die niedermolekularen Melaminderivate erst unmittelbar vor der Verarbeitung mit den Polyolen oder gegebenenfalls Polyisocyanaten gemischt werden können.

Die US-PS 4 130 697 und US-PS 4 176 217 beschreiben schaumstoffe mit verbessertem Brandverhalten aus wäßrigen Aminoplastvorkondensaten, beispielsweise Melamin-Formaldehyd-, vorzugsweise Harnstoff-Formaldehyd- und Harnstoff-Melamin-Formaldehyd-Vorkondensaten, gegebenenfalls Polyolen und Polyisocyanaten. Nachteilig an den Verfahren ist, daß die Aminoplastvorkondensate gleichzeitig mit, aber getrennt von den sauren Härtungskatalysatoren den Polyisocyanaten zugesetzt werden müssen, d. h. auch nach dieser Methode müssen mehr als zwei Ausgangsstoffe gleichzeitig intensiv gemischt werden.

Im Vergleich zu üblichen Herstellungsverfahren für Polyurethanschaumstoffe aus Polyisocyanaten und Polyolen treten bei der praktischen Durchführung nach den beschriebenen Verfahren bei zusätzlicher Mitverwendung von niedermolekularen, ganz oder teilweise verätherten Methylolmelaminen oder Aminoplast-Vorkondensaten erhebliche Probleme auf : Die verwendbaren wäßrigen Melamin-Formaldehyd-Vorkondensatlösungen besitzen insbesondere im Vergleich mit harnstoffhaltigen Aminoplastvorkondensaten eine sehr begrenzte Lagerstabilität. Die Harzlösungen müssen ebenso wie etwaige Mischungen aus Polyol und Aminoplastvorkondensaten unmittelbar vor der Reaktion mit Polyisocyanaten frisch hergestellt werden. Aufgrund der hohen Reaktivität solcher Aminoplastvorkondensate kann der zur Vernetzung erforderliche « saure » Katalysator nicht vorab der Harzlösung einverleibt werden, d. h. zur Verarbeitung werden stets teurere Mehrkomponenten-Verschäumungsmaschinen benötigt. Schließ-

lich weisen die aus solchen Aminoplastvorkondensaten hergestellten Schaumstoffe eine beträchtliche Formaldehydemission auf, so daß sie für zahlreiche Anwendungsbereiche unbrauchbar sind, und zeigen, insbesondere wenn bei der Herstellung keine Polyole mitverwendet wurden, einen starken Schrumpf.

Der vorliegenden Erfindung lag die Aufgabe zugrunde, Polyurethanschaumstoffe mit guten mechanischen Eigenschaften und verbesserter Flammbeständigkeit unter Mitverwendung von wäßrigen Melamin-Formaldehyd-Vorkondensatlösungen zu entwickeln. Die Polyurethanschaumstoffe sollten auf üblichen Verschäumungsmaschinen nach dem Zweikomponentenverfahren, vorzugsweise mit Kohlendioxid, erhalten aus den Polyisocyanaten und Wasser, als Treibmittel und unter möglichst weitgehendem Verzicht auf die ökologisch problematischen Fluorkohlenwasserstoffe herstellbar sein. Die erhaltenen Schaumstoffe sollten außerdem keine Formaldehydemission zeigen.

Diese Aufgabe konnte überraschenderweise gelöst werden durch ein Verfahren zur Herstellung von Polyurethanschaumstoffen durch Umsetzung von organischen Polyisocyanaten, Polyolen und Melamin-Formaldehyd-Vorkondensaten in Gegenwart von Treibmitteln und Katalysatoren sowie gegebenenfalls Kettenverlängerungs- oder Vernetzungsmitteln, Hilfsmitteln und Zusatzstoffen, das dadurch gekennzeichnet ist, daß man als Melamin-Formaldehyd-Vorkondensate wäßrige Harzlösungen mit einem Melamin-Formaldehyd-Vorkondensatgehalt von 40 bis 85 Gew.-%, bezogen auf das Gesamtgewicht, verwendet, die erhalten werden durch Kondensation von Melamin mit Formaldehyd im Molverhältnis 1 : 1,1 bis 1,75 in wäßriger Lösung.

Es zeigte sich, daß wäßrige 40 bis 85 gew.-%ige Melamin-Formaldehyd-Vorkondensatlösungen, die durch kondensation von Melamin und Formaldehyd im Molverhältnis 1 : 1,1 bis 1,75 erhalten werden, relativ lagerstabil sind. Überraschend war insbesondere, daß Mischungen aus 100 Gew.-Teilen der erfindungsgemäß verwendbaren wäßrigen Melamin-Formaldehyd-Vorkondensate und 1 bis 50 Gew.-Teilen Polyol sowie gegebenenfalls Kettenverlängerungs- oder Vernetzungsmittel, Hilfsmittel und Zusatzstoffen in Gegenwart von basischen Polyurethankatalysatoren, insbesondere tertiären Aminen, und « sauren » Härtungskatalysatoren eine Lagerstabilität bei Raumtemperatur von 1 Woche oder mehr aufweisen unter der Voraussetzung, daß die Mischungen einen pH-Wert größer als 7, besitzen. Die mit Melamin-Formaldehyd-Vorkondensaten modifizierten Polyurethanschaumstoffe können daher in vorteilhafter Weise nach dem Zweikomponenten-Verfahren hergestellt werden, das in bevorzugter Weise Anwendung findet. Als weitere Vorteile seien beispielhaft genannt :

Die wäßrigen Melamin-Formaldehyd-Vorkondensatlösungen können hochkonzentriert sein, d. h. die Lösungen sind selbst bei einem Feststoffgehalt von 85 Gew.-% noch gut fließfähig ; als bevorzugtes Treibmittel wird Kohlendioxid aus Wasser und Polyisocyanat verwendet ; die erhaltenen Polyurethanschaumstoffe sind gut flammbeständig und zeigen praktisch keine Formaldehydemission.

Nach dem erfindungsgemäßen Verfahren werden vorzugsweise Polyurethan-Hartschaumstoffe hergestellt. Es können jedoch auch halbharte und weichelastische Polyurethanschaumstoffe erhalten werden.

Zu den für das erfindungsgemäße Verfahren verwendbaren Ausgangskomponenten ist folgendes auszuführen :

Als organische Polyisocyanate kommen beispielsweise aliphatische, cycloaliphatische, arylaliphatische, heterocyclische und vorzugsweise aromatische mehrwertige Isocyanate in Betracht. Im einzelnen seien beispielhaft genannt : aliphatische Diisocyanate wie Äthylen-, 1,4-Tetramethylen-, 1,6-Hexamethylen- und 1,12-Dodecandiisocyanat ; cycloaliphatische Diisocyanate; wie Cyclohexan-1,3- und 1,4-diisocyanat sowie beliebige Gemische dieser Isomeren, 1-Isocyanato-3,3,5-trimethyl-5-isocyanatomethyl-cyclohexan, 2,4- und 2,6-Hexahydrotoluylen-diisocyanat sowie beliebige Gemische dieser Isomeren, 4,4'- und 2,4'-Diisocyanato-dicyclohexylmethan ; aromatische Diisocyanate, wie 1,3- und 1,4-Phenylendiisocyanat, 2,4- und 2,6-Toluylendiisocyanat sowie beliebige Gemische dieser Isomeren, 2,2'-, 2,4'- und 4,4'-Diphenylmethan-diisocyanat und Naphthalin-1,5-diisocyanat ; aromatische Polyisocyanate wie 4,4',4''-Triphenylmethan-triisocyanat, 2,4,6-Triisocyanatobenzol und Polyphenyl-polymethylen-polyisocyanate. Verwendet werden können ferner modifizierte Polyisocyanate, beispielsweise solche wie sie in der US-PS 3 492 330 beschrieben werden, Carbodiimidgruppen aufweisende Polyisocyanate (DE-PS 1 092 007), Allophanatgruppen aufweisende Polyisocyanate (GB-PS 994 890 ; BE-PS 761 626), Isocyanuratgruppen aufweisende Polyisocyanate (DE-PS 10 22 789, DE-PS 12 22 067, DE-PS 10 27 394, DE-OS 19 29 034 und DE-OS 20 04 048), Urethangruppen aufweisende Polyisocyanate (BE-PS 752 261, US-PS 3 394 164), Biuretgruppen aufweisende Polyisocyanate (DE-PS 11 01 394, GB-PS 889 050) und Estergruppen aufweisende Polyisocyanate (GB-PS 965 474, GB-PS 10 72 956, US-PS 3 567 763, DE-PS 12 31 688).

Bevorzugt verwendet werden die technisch gut zugänglichen aromatischen Di- und Polyisocyanate wie 2,4- und 2,6-Toluylendiisocyanat sowie beliebige Gemische dieser Isomeren, 2,2'-, 2,4'- und 4,4'-Diphenylmethan-diisocyanat sowie beliebige Gemische dieser Isomeren, Mischungen aus 2,2'-, 2,4'-, 4,4'-Diphenylmethan-diisocyanaten und Polyphenyl-polymethylen-polyisocyanaten (Roh-MDI) und Gemische aus Toluylen-diisocyanaten und Roh-MDI sowie Urethan- und Isocyanuratgruppen aufweisende Polyisocyanate. Die genannten Di- und Polyisocyanate können einzeln oder in Form von Mischungen eingesetzt werden.

Als Polyole werden bei dem erfindungsgemäßen Verfahren vorzugsweise übliche lineare und/oder verzweigte Polyesterole und insbesondere Polyätherole mit Molekulargewichten von 200 bis 8 000, vorzugsweise 800 bis 5 000, und insbesonders 1 800 bis 3 500, verwendet. In Betracht kommen jedoch auch andere hydroxylgruppenhaltige Polymere mit den genannten Molekulargewichten, beispielsweise Polyesteramide, Polyacetale und Polycarbonate, insbesondere solche, hergestellt aus Diphenylcarbonat und Hexandiol-1,6 durch Umesterung.

Die Polyesterole können beispielsweise aus Dicarbonsäuren, vorzugsweise aliphatischen Dicarbonsäuren, mit 2 bis 12, vorzugsweise 4 bis 8 Kohlenstoffatomen im Alkylenrest und mehrwertigen Alkoholen, vorzugsweise Diolen, hergestellt werden. Genannt seien beispielhaft aliphatische Dicarbonsäuren, wie Glutarsäure, Pimelinsäure, Korksäure, Azelainsäure, Sebacinsäure, Undecandisäure, Dodecandisäure und vorzugsweise Bernstein- und Adipinsäure, und aromatische Dicarbonsäuren, wie Phthalsäure und Terephthalsäure. Beispiele für zwei- und mehrwertige, insbesondere zwei- und dreiwertige Alkohole sind : Äthylenglykol, Diäthylenglykol, 1,2- bzw. 1,3-Propylenglykol, Dipropylenglykol, Decandiol-1,10, Glycerin, Trimethylolpropan und vorzugsweise Butandiol-1,4 und Hexandiol-1,6.

Die Polyesterole besitzen Molekulargewichte von 300 bis 2 800, vorzugsweise von 300 bis 2 000, und Hydroxylzahlen von 30 bis 700, vorzugsweise von 50 bis 500.

Vorzugsweise als Polyole verwendet werden jedoch Polyätherole, die nach bekannten Verfahren aus einem oder mehreren Alkylenoxiden mit 2 bis 4 Kohlenstoffatomen im Alkylenrest und einem Startermolekül, das 2 bis 8, vorzugsweise 2 bis 4 aktive Wasserstoffatome enthält, hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Äthylenoxid und 1,2-Propylenoxid.

Die Alkylenoxide können einzeln, alternierend nacheinander oder als Mischungen verwendet werden. Als Startermoleküle kommen beispielsweise in Betracht :

Wasser, organische Dicarbonsäure, wie Bernsteinsäure, Adipinsäure, Phthalsäure und Terephthalsäure, aliphatische und aromatische, gegebenenfalls N-mono-, N,N- und N,N'-dialkylsubstituierte diamine mit 1 bis 4 Kohlenstoffatomen im Alkylrest, wie gegebenenfalls mono- und dialkylsubstituiertes Äthylendiamin, Diäthylentriamin, Triäthylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,4- und 2,6-Toluylendiamin und 4,4'-, 2,4'- und 2,2'-Diamino-diphenylmethan ; Monoamine, wie Methylamin, Äthylamin, Isopropylamin, Butylamin, Benzylamin, Anilin, die Toluidine und Naphthylamine. Von den Verbindungen der erwähnten Gruppe sind besonders interessant N,N,N',N'-Tetrakis-(2-hydroxyäthyl)-äthylendiamin, N,N,N',N'-Tetrakis-(2-hydroxypropyl)-äthylendiamin, N,N,N'N'',N''-Pentakis-(2-hydroxypropyl)-äthylentriamin, Phenyldiisopropanolamin und höhere Alkylenoxidaddukte von Anilin.

Als Startermoleküle kommen ferner in Betracht Alkanolamine, wie Äthanolamin, Diäthanolamin, N-Methyl- und N-Äthyl-diäthanolamin, N-Methyl- und N-Äthyl-dipropanolamin und Triäthanolamin, Hydrazin und Hydrazide. Vorzugsweise verwendet werden mehrwertige, insbesondere zwei- und/oder dreiwertige Alkohole, wie Äthylenglykol, Propylenglykol-1,2 und -1,3, Diäthylenglykol, Dipropylglykol, Butylenglykol-1,4, Hexamethylenglykol-1,6, Glycerin, Trimethylol-propan und Pentaerythrit.

Andere anwendbare Polyole sind die nicht-reduzierenden Zucker, die nicht-reduzierenden Zuckerderivate und bevorzugt deren Alkylenoxid-Addukte, worin die Alkylenoxide 2 bis 4 Kohlenstoffatome haben. Verwendbare nicht-reduzierende Zucker und Zuckerderivate sind z. B. Saccharose, Alkylglykoside, wie Methylglykosid und Äthylenglykosid, ferner Glykolglykoside, wie Äthylenglykolglykosid, Propylenglykosid, Glyzeringlykosid und 1,2,6-Hexantriolglykosid.

Zu den Polyesteramiden zählen z. B. die aus mehrwertigen gesättigten und/oder ungesättigten Carbonsäuren bzw. deren Anhydriden und mehrwertigen gesättigten und/oder ungesättigten Aminoalkoholen, oder Mischungen aus mehrwertigen Alkoholen und Aminoalkoholen und Polyaminen gewonnenen, vorwiegend linearen Kondensate.

Als Polyacetale kommen z. B. die aus Glykolen, wie Diäthylenglykol, Triäthylenglykol, 4,4'-Dioxäthoxy-diphenyldimethylmethan, Hexandiol und Formaldehyd herstellbaren Verbindungen in Frage. Auch durch Polymerisation cyclischer Acetale lassen sich erfindungsgemäß geeignete Polyacetale herstellen.

Als Hydroxylgruppen aufweisende Polycarbonate kommen solche der an sich bekannten Art in Betracht, die z. B. durch Umsetzung von Diolen wie Propandiol-(1,3), Butandiol-(1,4) und/oder Hexandiol-(1,6), Diäthylenglykol, Triäthylenglykol, Tetraäthylenglykol mit Diarylcarbonaten, z. B. Diphenylcarbonat oder Phosgen, hergestellt werden können.

Die Polyole können einzeln oder in Form von Mischungen verwendet werden. Bewährt haben sich beispielsweise Mischungen aus Polyester- und Polyätherolen, wobei das Verhältnis der Komponenten je nach Verwendungszweck des herzustellenden Polyurethanhartschaumstoffs in breiten Grenzen, beispielsweise im Gewichtsverhältnis von Polyesterol zu Polyätherol von 20 : 80 bis 80 : 20 variiert werden kann.

Wesentliches Merkmal der vorliegenden Erfindung ist die Mitverwendung von wäßrigen Melamin-Formaldehyd-Vorkondensatlösungen mit Melamin-Formaldehyd-Vorkondensatgehalten von 40 bis 85 Gew.-%, vorzugsweise 50 bis 70 Gew.-%, bezogen auf das Gesamtgewicht, die hergestellt werden durch Kondensation von Melamin mit Formaldehyd im Molverhältnis von 1 : 1,1 bis 1,75, vorzugsweise 1 : 1,4 bis 1,70 und besonders 1 : 1,5 bis 1,65 in wäßriger Lösung.

Hierzu verwendet werden handelsübliches Melamin und vorzugsweise wäßrige, gegebenenfalls stabilisierte Formaldehydlösungen mit Formaldehydgehalten von 30 bis 40 Gew.-%.

Die Kondensation der erfindungsgemäß verwendbaren Melamin-Formaldehyd-Vorkondensate wird — wie bereits dargelegt — in wäßriger Lösung bei einer Temperatur von 60 bis 130 °C gegebenenfalls

4

## 0 040 720

unter Druck, vorzugsweise bei 80 bis 100 °C drucklos und zumindest zeitweise bei einem pH-Wert von größer als 8, vorzugsweise von 8 bis 12 und insbesondere 9 bis 11 (gemessen bei Raumtemperatur und mit Temperaturkompensation) durchgeführt bis eine Wasserverdünnbarkeit von 20 °C von 1 : 0,5 bis 4 erreicht ist. Unter der Wasserverdünnbarkeit im Sinne der Erfindung ist zu verstehen, daß ein Volumenteil Harzlösung bei 20 °C mit 0,5 bis 4 Volumenteilen Wasser verdünnt werden kann, ohne daß eine bleibende Trübung eintritt.

Zur Einstellung des pH-Bereiches können anorganische Basen, wie z. B. wäßrige Natron- oder Kalilauge, und/oder organische Basen, wie z. B. tertiäre Amine, Mono-, Di- und Trialkanolamine, N-Alkyl-, N,N-Dialkylalkanolamine, N-Alkyldialkanolamine u. a. verwendet werden. Nach beendeter Kondensation, die Reaktionszeiten betragen ungefähr 15 bis 400 Minuten, werden die Melamin-Formaldehyd-Vorkondensatlösungen abgekühlt. Die erhaltenen Lösungen sind 30 und mehr Tage bei Raumtemperatur lagerstabil und besitzen in Abhängigkeit von Feststoffgehalt Viskositäten bei 20 °C von 20 m. Pa.s bis 500 Pa.s, vorzugsweise 30 m.Pa.s bis 300 Pa.s und insbesondere 30 m.Pa.s bis 100 Pa.s, so daß sie noch relativ gut auf Polyurethanverschäumungsmaschinen verarbeitbar sind.

Zur Verbesserung der Lagerstabilität können den Melamin-Formaldehyd-Mischungen vor Beginn der Kondensation bzw. den Melamin-Formaldehyd-Vorkondensatlösungen im Laufe der Kondensation oder nach beendeter Kondensation gegebenenfalls Stabilisierungsmittel in Mengen von maximal 15 Gew.-%, vorzugsweise von 0,1 bis 3 Gew.-%, bezogen auf den Feststoffgehalt der Melamin-Formaldehyd-Vorkondensatlösung, einverleibt werden. Geeignet hierfür sind die für diesen Zweck an sich bekannten Stabilisatoren, wie z. B. Kombinationen von Toluolsulfonamid mit Alkoholen oder Saccharose, Dicyandiamid in Gegenwart von Alkoholen und Guanidiniumsalzen, Lactame, Caprolactame und Thioharnstoff.

Die erhaltenen Melamin-Formaldehyd-Vorkondensatlösungen können gegebenenfalls sofort nach ihrer Herstellung oder erst unmittelbar vor der Verarbeitung zu Polyurethanen mit den anderen Ausgangskomponenten, Hilfsmittel und Zusatzstoffen, ausgenommen Polyisocyanate, gemischt werden. Zweckmäßigerweise werden die erhaltenen Melamin-Formaldehyd-Vorkondensatlösungen unmittelbar nach der Kondensation mit den Katalysatoren, gegebenenfalls Polyolen, Kettenverlängerungs- oder Vernetzungsmitteln, inerten physikalisch wirkenden Treibmitteln, Hilfsmitteln und Zusatzstoffen gemischt und als sogenannte A-Komponente gelagert. Gegebenenfalls kann es auch vorteilhaft sein, die Kondensation von Melamin und Formaldehyd in wäßrigem Medium in Gegenwart der Polyole und der zur Schaumstoffherstellung geeigneten Katalysatoren durchzuführen.

Zur Polyurethanherstellung geeignet sind Mischungen aus 100 Gew.-Teilen 40 bis 85 gew.-%igen Melamin-Formaldehyd-Vorkondensatlösungen und 1 bis 50 Gew.-Teilen, vorzugsweise 8 bis 20 Gew.-Teilen Polyol. Lagerstabile, basische Polyurethan- und gegebenenfalls saure Härtungskatalysatoren enthaltende Mischungen werden jedoch — wie bereits erwähnt — nur erhalten, wenn diese einen pH-Wert von größer als 7, vorzugsweise von 8 bis 12 besitzen.

Gegebenenfalls kann es zweckmäßig sein, neben den genannten Polyolen zusätzlich Kettenverlängerungsmittel oder Vernetzungsmittel, zur Herstellung der Polyurethanschaumstoffe mitzuverwenden. Als derartige Mittel kommen polyfunktionelle, insbesondere di- und trifunktionelle Verbindungen mit Molekulargewichten von 17 bis 600, vorzugsweise 60 bis 300, in Betracht. Verwendet werden beispielsweise Di- und Trialkanolamine, wie Diäthanolamin und Triäthanolamin, aliphatische und aromatische Diamine, wie z. B. Äthylendiamin, Butylendiamin-1,4, Hexamethylendiamin-1,6, 4,4'-Diamino-diphenylmethan, 3,3'-dialkylsubstituierte 4,4'-Diaminodiphenylmethane, 2,4- und 2,6-Toluylendiamin und vorzugsweise aliphatische Diole und Triole mit 2 bis 6 Kohlenstoffatomen, wie Äthylenglykol, 1,4-Butylenglykol, 1,6-Hexamethylenglykol, Glyzerin und Trimethylolpropan.

Sofern Kettenverlängerungs- oder Vernetzungsmittel eingesetzt werden, kommen diese in Mengen von 1 bis 60, vorzugsweise von 10 bis 30 pro 100 Gew.-Teile Polyol zur Anwendung.

Zur Beschleunigung der Umsetzung zwischen den Polyolen, Wasser und gegebenenfalls Kettenverlängerungs- oder Vernetzungsmittel und den organischen Polyisocyanaten werden der Reaktionsmischung oder vorzugsweise der A-Komponente übliche Polyurethankatalysatoren in einer Menge von 0,5 bis 15 Gew.-Teilen, vorzugsweise 3 bis 10 Gew.-Teilen pro 100 Gew.-Teilen der wäßrigen Melamin-Formaldehyd-Vorkondensatlösung einverleibt. Vorzugsweise verwendet werden basische Polyurethankatalysatoren, beispielsweise tertiäre Amine, wie Dimethylbenzylamin, Dicyclohexylmethylamin, Dimethylcyclohexylamin, N,N,N',N'-Tetramethyl-diaminoäthyläther, Bis-(dimethylaminopropyl)-harnstoff, N-Methyl- bzw. N-Äthylmorpholin, Dimethylpiperazin, Pyridin, 1,2-Dimethylimidazol, 1-Azobicyclo-(3,3,0)-octan, Dimethylaminoäthanol, N,N',N''-Tris-(dialkylaminoalkyl)-hexahydrotriazine, z. B. N,N',N''-Tris-(dimethylaminopropyl)-s-hexahydrotriazin und insbesondere Triäthylendiamin und Triäthanolamin. Geeignet sind jedoch auch Metallsalze, wie Eisen-(II)-chlorid, Zinkchlorid, Bleioctoat und vorzugsweise Zinnsalze, wie Zinndioctoat, Zinndiäthylhexoat und Dibutylzinndilaurat, die gewöhnlich eingesetzt werden, wenn nicht nach dem Zweikomponentenverfahren gearbeitet wird.

Es hat sich als vorteilhaft erwiesen neben den Polyurethankatalysatoren auch « saure » Härtungskatalysatoren zur Herstellung der Polyurethanschaumstoffe mitzuverwenden, so daß diese Verfahrensvariante bevorzugt Anwendung findet. Als saure Härtungskatalysatoren, die in Mengen von 0,5 bis 5 Gew.-Teilen, vorzugsweise 1 bis 3 Gew.-Teilen pro 100 Gew.-Teilen Melamin-Formaldehyd-Vorkondensatlösung eingesetzt werden, seien beispielhaft genannt : anorganische Säuren, wie Salz-, Schwefel- und insbesondere Phosphorsäure, organische Carbonsäuren, wie Ameisensäure, Oxalsäure, Trichloressigsä-

5

0 040 720

ure, Sulfonsäuren, wie Amidosulfonsäure und p-Toluolsulfonsäure, Lewissäuren, wie Bortrifluorid, Phosphortrichlorid und Phosphoroxychlorid, organische Carbonsäurechloride, wie Benzoylchlorid und sogenannte latente Härter wie die Salze von Ammoniak, organischen Aminen oder Magnesium der obengenannten Säuren sowie deren Ester. Als Treibmittel wird vorzugsweise ausschließlich Wasser verwendet, das in einem großen Überschuß mit der wäßrigen Melamin-Formaldehyd-Vorkondensatlösung in die Reaktionsmischung einverleibt wird und teilweise mit den Polyisocyanaten unter Bildung von Kohlendioxid reagiert.

Im Gemisch mit Wasser können auch physikalisch wirkende Treibmittel eingesetzt werden. Geeignet sind Flüssigkeiten, welche gegenüber den organischen Polyisocyanaten inert sind und Siedepunkte unter 100 °C, vorzugsweise unter 50 °C, insbesondere zwischen − 50 °C und 30 °C bei Atmosphärendruck aufweisen, so daß sie unter dem Einfluß der exothermen Polyadditions- und Polykondensationsreaktion verdampfen. Beispiele derartiger, vorzugsweise verwendbarer Flüssigkeiten sind Kohlenwasserstoffe, wie Pentan, n- und iso-Butan und Propan, Äther, wie Dimethyläther und Diäthyläther, Ketone, wie Aceton und Methyläthylketon, Äthylacetat und vorzugsweise halogenierte Kohlenwasserstoffe, wie Methylenchlorid, Trichlorfluormethan, Dichlordifluormethan, Dichlormonofluormethan, Dichlortetrafluoräthan und 1,1,2-Trichlor-1,2,2-trifluoräthan. Auch Gemische dieser niedrigsiedenden Flüssigkeiten untereinander und/oder mit anderen substituierten oder unsubstituierten Kohlenwasserstoffen können verwendet werden.

Die neben Wasser erforderliche Menge an physikalisch wirkenden Treibmitteln kann in Abhängigkeit von der gewünschten Schaumstoffdichte auf einfache Weise ermittelt werden und beträgt ungefähr 5 bis 40 Gew.-Teile, vorzugsweise 10 bis 30 Gew.-Teile pro 100 Gew.-Teile Melamin-Formaldehyd-Vorkondensatlösung. Gegebenenfalls kann es zweckmäßig sein, das organische Polyisocyanat mit dem physikalisch wirkenden Treibmittel zu mischen und dadurch die Viskosität der B-Komponente zu verringern.

Der Reaktionsmischung können auch noch Hilfsmittel und Zusatzstoffe einverleibt werden. Genannt seien beispielsweise Stabilisatoren, Hydrolysenschutzmittel, Porenregler, fungistatisch und bakteriostatisch wirkende Substanzen, Farbstoffe, Pigmente, Füllstoffe, oberflächenaktive Stoffe, Weichmacher und Flammschutzmittel.

In Betracht kommen beispielsweise oberflächenaktive Substanzen, welche zur Unterstützung der Homogenisierung der Ausgangsstoffe dienen und gegebenenfalls auch geeignet sind, die Zellstruktur der Schaumstoffe zu regulieren. Genannt seien beispielhaft Siloxan-Oxyalkylen-Mischpolymerisate und andere Organopolysiloxane, oxäthylierte Alkylphenole, oxäthylierte Fettalkohole, Paraffinöle, Rizinusöl- bzw. Rizinolsäureester und Türkischrotöl, die in Mengen von 0,2 bis 8, vorzugsweise von 0,5 bis 5 Gewichtsteilen pro 100 Gewichtsteilen Melamin-Formaldehyd-Vorkondensatlösung angewandt werden.

Es kann auch vorteilhaft sein, einen Weichmacher in das Reaktionsgemisch einzubeziehen, so daß die Neigung zur Sprödigkeit in den Produkten verringert wird. Es können übliche Weichmachungsmittel verwendet werden, doch ist es besonders zweckmäßig, solche Mittel zu verwenden, die Phosphor und/oder Halogenatome enthalten und dadurch die Flammfestigkeit der Polyurethankunststoffe zusätzlich vergrößern. Zu solchen Mitteln gehören Trikresylphosphat, Tris-2-chloräthylphosphat, trischlorpropylphosphat und Tris-2,3-dibrompropylphosphat.

Außer den bereits genannten Melamin-Formaldehyd-Kondensaten und halogensubstituierten Phosphaten können auch anorganische Flammschutzmittel, wie Antimontrioxid, Arsenoxid, Ammoniumphosphat und Calciumsulfat zum Flammfestmachen der Polyurethanschaumstoffe verwendet werden.

Im allgemeinen hat es sich als vorteilhaft erwiesen, 5 bis 50 Gewichtsteile, vorzugsweise 5 bis 25 Gewichtsteile der genannten Flammschutzmittel für jeweils 100 Gewichtsteile an Melamin-Formaldehyd-Vorkondensatlösung zu verwenden.

Die Polyurethanschaumstoffe können nach dem one shot-Verfahren hergestellt werden. Hierzu werden die organischen Polyisocyanate und Polyole, Melamin-Formaldehyd-Vorkondensate, Wasser und gegebenenfalls Kettenverlängerungsmittel oder Vernetzungsmittel in Gegenwart der Katalysatoren bei Temperaturen von 5 bis 40 °C, vorzugsweise 18 bis 25 °C in solchen Mengenverhältnissen zur Umsetzung gebracht, daß pro NCO-Gruppen 0,2 bis 35, vorzugsweise 5 bis 15 und insbesondere ungefähr ein reaktive(s) Wasserstoffatom(e), gebunden an OH-, $NH_2$-, NH-, SH-, COOH- oder $CONH_2$-Gruppen der Polyole, Melamin-Formaldehyd-Vorkondensat und gegebenenfalls Kettenverlängerungs- oder Vernetzungsmittel vorliegen und das Molverhältnis von Äquivalente Wasser zu Äquivalente NCO-Gruppen 135 bis 0,9, vorzugsweise 20 bis 5 : 1 und insbesondere 15 bis 5 : 1 beträgt.

Bei Verwendung einer Mischkammer mit mehreren Zulaufdüsen können die Ausgangsstoffe, Hilfsmittel und Zusatzstoffe einzeln zugeführt und in der Mischkammer intensiv vermischt werden. Sofern eine gewisse Viskositätserhöhung, die beim Mischen der Melamin-Formaldehyd-Vorkondensatlösung mit den Polyolen eventuell auftreten kann, die Verarbeitung nicht nachteilig beeinflußt, hat es sich als zweckmäßig erwiesen, die Ausgangsstoffe nach dem Zweikomponenten-Verfahren zur Reaktion zu bringen, wobei die lagerstabile A-Komponente enthält :

Melamin-Formaldehyd-Vorkondensate, Wasser, mindestens einen basischen Polyurethankatalysator, gegebenenfalls Polyole, saure Kondensationskatalysatoren, physikalisch wirkende Treibmittel, Kettenverlängerungs- oder Vernetzungsmittel, Hilfsmittel und Zusatzstoffe und einen pH-Wert größer als 7 aufweist

und die B-Komponente enthält:

Polyisocyanate oder Isocyanatgruppen-haltige Präpolymere, gegebenenfalls physikalisch wirkende Treibmittel, Hilfsmittel und Zusatzstoffe.

Vorteilhaft ist hierbei, daß die A- und B-Komponente raumsparend transportiert und beschränkte Zeit gelagert werden können und vor Herstellung der Polyurethanschaumstoffe nur noch intenstiv gemischt werden müssen.

Nach dieser Verfahrensvariante hergestellte Polyurethanschaumstoff-Formteile zeigen praktisch keinen oder nur einen geringen Schrumpf.

Nach einer weiteren Verfahrensvariante werden die Polyole zunächst ganz oder teilweise mit den Polyisocyanaten zu Isocyanatgruppen-haltigen Präpolymeren umgesetzt, die dann als B-Komponente verwendet werden. Als vorteilhaft hat es sich hierbei erwiesen, aus mindestens 50 Gew.%, vorzugsweise mehr als 90 Gew.%, der zur Verwendung kommenden Polyole Isocyanatgruppen-haltige Präpolymere herzustellen. Die restliche Menge an Polyolen kann entweder direkt im Mischkopf mit den anderen Ausgangskomponenten, Hilfsmitteln und Zusatzstoffen gemischt werden oder die Polyole können, wie oben beschrieben, mit den wäßrigen Melamin-Formaldehyd-Vorkondensatlösungen, Polyurethankatalysatoren, sauren Härtungskatalysatoren und gegebenenfalls Kettenverlängerungs- oder Vernetzungsmitteln, physikalisch wirkenden Treibmitteln, Hilfsmitteln und Zusatzstoffen zu der A-Komponente vereinigt werden.

Die Isocyanatgruppen-haltigen Präpolymeren werden nach üblichen Methoden aus den obengenannten Polyolen und vorzugsweise aromatischen Polyisocyanaten hergestellt und besitzen NCO-Gehalte von 3 bis 35, vorzugsweise von 12 bis 28.

Die nach dem erfindungsgemäßen Verfahren hergestellten Polyurethanschaumstoffe besitzen Dichten von 10 bis 300 kg/m$^3$, vorzugsweise 30 bis 50 kg/m$^3$ und zeichne sich durch eine geringe Wasseraufnahme, geringe Schwindung, niedrige Wärmeleitzahl und praktisch keine Formaldehydemission aus.

Die Produkte werden vorzugsweise als Isoliermaterial verwendet.

Die in den Beispielen genannten Teile beziehen sich auf das Gewicht.

Herstellung der wäßrigen Melamin-Formaldehyd-Vorkondensatlösungen.

## Beispiele 1a bis 1c

1a) In einem Reaktionsgefäß wurden 2 388 g 40 %ige Formaldehydlösung, 2 432 g Melamin und 1 942 g Wasser gemischt und mit 12,9 ml Kalilauge (c = 1,8 mol/l) sowie 12 ml Diäthyläthanolamin versetzt. Anschließend wird auf 96 °C aufgeheizt, wobei das Reaktionsgemisch in Lösung geht.

Die Kondensation wurde bei 96 °C 140 min fortgeführt und anschließend auf 20 °C abgekühlt.

Der pH-Wert der Lösung betrug 10,1, das Formaldehyd-Melamin-Molverhältnis 1,65, die Viskosität 35 m.Pas/20 °C, der Feststoffgehalt 50 %, die Wasserverdünnbarkeit 1 : 2 und die Lagerstabilität bei 20 °C 35 Tage.

1b) Zur Herstellung einer 75 %igen Harzlösung wurden aus 1 500 g der in Beispiel 1a beschriebenen Lösung 500 g Wasser unter vermindertem Druck abdestilliert.

1c) Zur Herstellung einer 80 %igen Harzlösung wurden aus 1 600 g der in Beispiel 1a beschriebenen Lösung 600 g Wasser unter vermindertem Druck abdestilliert.

1d) Zur Herstellung einer 70-%igen Harzlösung werden aus 1 400 g der in Beispiel 1a beschriebenen Lösung 400 g Wasser unter vermindertem Druck abdestilliert.

## Beispiel 2

Analog den Angaben von Beispiel 1a wurden 2 388 g 40 %ige Formaldehydlösung, 2 585 g Melamin, 2 095 g Wasser und 12,0 ml Kalilauge (c = 1,8 mol/l) und 10 ml Diäthyläthanolamin vermischt und kondensiert.

Der pH-Wert der Lösung betrug 10,1, das Formaldehyd-Melamin-Molverhältnis 1,55, die Viskosität 31 m.Pa.s der Feststoffgehalt 50,3 %, die Wasserverdünnbarkeit 1 : 2 und die Lagerstabilität 40 Tage bei 20 °C.

Harzlösungen mit höherem Feststoffgehalt können wiederum durch Abdestillieren von Wasser unter vermindertem Druck erhalten werden.

Herstellung von Polyurethanschaumstoffen.

## Beispiele 3 bis 9

Zur Herstellung der Polyurethanschaumstoffe werden die A- und B-Komponenten, die Raumtemperatur aufweisen, bei Raumtemperatur 20 Sekunden intensiv vermischt und in einer offenen Form aufschäumen gelassen.

Die verwendeten Ausgangsstoffe und Mengen sowie die gemessenen Start-, Steig-, Klebfreizeiten, Dichten und das Brandverhalten sind in Tabelle I zusammengefaßt.

In der Tabelle wurde das Molverhältnis Formaldehyd : Melamin mit F : M abgekürzt.

7

Tabelle I

| Ausgangskomponenten | Beispiele | | | | | | |
|---|---|---|---|---|---|---|---|
| | 3 | 4 | 5 | 6 | 7 | 8 | 9 |
| **A–Komponente** | | | | | | | |
| Melamin–Formaldehyd–Vorkondensat–Lösung nach | | | | | | | |
| Beispiel 1b (F:M = 1,65; 75 %ig) [g] | 100 | – | – | 100 | 100 | – | – |
| Beispiel 1c (F:M = 1,65; 80 %ig) [g] | – | – | 100 | – | – | – | – |
| Beispiel 2 (F:M = 1,55; 50 %ig) [g] | – | 100 | – | – | – | 100 | 100 |
| Polyetherol auf Basis Glycerin, Propylenoxid, Ethylenoxid mit einer OH–Zahl von 35 [g] | 10 | 10 | – | – | 5 | 5 | 5 |
| Polyetherol auf Basis Äthylendiamin und Propylenoxid mit einer OH–Zahl von 480 [g] | – | – | – | 10 | 5 | 5 | – |
| Polyesterol auf Basis Adipinsäure, Äthylenglykol, Butandiol-1,4 mit einer OH–Zahl von 53-59 [g] | – | – | 10 | – | – | – | 5 |
| Triäthanolamin [g] | 5 | 5 | 2 | 1 | 5 | 3 | 5 |
| Dibutylzinndilaurat [g] | 1 | – | – | – | 1 | 1 | 1 |
| Phosphorsäure (75 %ig) [g] | 1 | 1 | – | – | – | 1 | – |
| Na-salz eines $C_{15}$-Paraffinsulfonats [g] | 3 | 3 | 3 | 3 | 3 | 3 | 3 |

0 040 720

Tabelle I (Fortsetzung)

| Ausgangskomponenten | Beispiele | 3 | 4 | 5 | 6 | 7 | 8 | 9 |
|---|---|---|---|---|---|---|---|---|
| B-Komponente | | | | | | | | |
| Mischung aus Diphenylmethandi-isocyanaten und Polyphenyl-poly-methylen-polyisocyanaten (Roh-MDI) | [g] | 40 | 40 | – | 40 | 40 | 40 | 40 |
| Mischung aus 2,4- und 2,6-To-luylen-diisocyanaten im Ver-hältnis 80:20 | [g] | – | – | 20 | – | – | – | – |
| Startzeit | [sec] | 40 | 52 | 30 | 40 | 35 | 60 | 50 |
| Steigzeit | [sec] | 165 | 190 | 140 | 150 | 170 | 195 | 185 |
| Klebfreizeit | [sec] | 165 | 190 | 140 | 160 | 180 | 200 | 190 |
| Dichte | [kg/m$^3$] | 42 | 44 | 70 | 45 | 41 | 46 | 49 |
| Brandverhalten nach DIN 4102 | | B2 | B2 | B2 | B2 | B2 | B2 | B2 |
| Wasseraufnahme nach 7 Tagen | [Vol%] | 3 | 7 | 5 | 4 | 7 | 7 | 6 |
| Schwindung nach 7 Tagen Lagerung bei 20°C | [Vol%] | 6 | 4,5 | 5,1 | 4,6 | 6,2 | 3,4 | 5,9 |
| Wärmeleitzahl gemessen bei 10°C | [W/m°K] | 0,039 | 0,037 | 0,036 | 0,039 | 0,040 | 0,038 | 0,036 |

0 040 720

### Beispiele 10 a-d

Zur Herstellung der Isocyanatgruppen-haltigen Präpolymeren werden die organischen Polyisocyanate und Polyole unter Rühren bei Raumtemperatur gemischt und anschließend wird die Polyaddition bei 70 °C in 3,5 Stunden zu Ende geführt.

Die verwendeten Ausgangskomponenten und Mengen sowie die NCO-Gehalte der erhaltenen Präpolymeren sind in Tabelle II zusammengefaßt.

Tabelle II

| Beispiele | | 10a | 10b | 10c | 10d |
|---|---|---|---|---|---|
| Mischung aus Diphenylmethandiiso-cyanat und Polyphenyl-polymethylen-polyisocyanat | [Gew-T] | 70 | 80 | – | 60 |
| Mischung aus 2,4- und 2,6-Toluylen-diisocyanat im Verhältnis 80:20 | [Gew-T] | – | – | 40 | – |
| Polyetherol auf Basis Glycerin, Propylenoxid, Ethylenoxid mit einer OH-Zahl von 35 | [Gew-T] | 30 | 20 | 60 | 40 |
| NCO-Gehalt des erhaltenen Präpoly-meren·(berechnet) | [Gew-T] | 21,0 | 24,3 | 14,4 | 17,6 |

### Beispiele 11-14

Die Polyurethanschaumstoffe werden analog den Angaben der Beispiele 3-9 hergestellt.

Die verwendeten Ausgangskomponenten und Mengen sowie die gemessenen Start-, Steig- und Klebfreizeit, die Dichte und das Brandverhalten nach ASTM D 635-77 sind in Tabelle III zusammengefaßt.

Tabelle III

| Beispiele | | 11 | 12 | 13 | 14 |
|---|---|---|---|---|---|
| A-Komponente | | | | | |
| Melamin-Formaldehyd-Vorkondensat-lösung nach | | | | | |
| Beispiel 1c (F:M=1,65; 80%ig) | [g] | – | – | – | 100 |
| "       1d (F:M=1,65; 70%ig) | [g] | 60 | – | 100 | – |
| "       2  (F:M=1,55; 50%ig) | [g] | – | 100 | – | – |
| Polyetherol auf Basis Glycerin, Propylenoxid, Ethylenoxid; OH-Zahl 35 | [g] | – | 5 | – | – |
| Polyetherol auf Basis Äthylen-diamin, Propylenoxid; OH-Zahl 480 | [g] | – | – | 5 | – |
| Triethanolamin | [g] | 5 | 5 | 5 | 5 |
| Dibutylzinndilaurat | [g] | – | – | – | 1 |
| Na-Salz des $C_{15}$-Paraffinsulfonats | [g] | 3 | 3 | 3 | 3 |
| B-Komponente nach | | | | | |
| Beispiel 10a | [g] | 100 | – | – | – |
| "       10b | [g] | – | 100 | – | – |
| "       10c | [g] | – | – | 100 | – |
| "       10d | [g] | – | – | – | 140 |

(Fortsetzung)

| Beispiele | | 11 | 12 | 13 | 14 |
|---|---|---|---|---|---|
| Startzeit | [sec] | 30 | 40 | 30 | 15 |
| Steigzeit | [sec] | 120 | 115 | 110 | 90 |
| Klebfreizeit | [sec] | 120 | 120 | 110 | 90 |
| Dichte | [kg/m$^3$] | 18 | 28 | 30 | 14 |
| Brandverhalten nach ASTM D 635-77 | | selbstverlöschend | | | |

**Patentansprüche**

1. Verfahren zur Herstellung von Polyurethan-Schaumstoffen durch Umsetzung von organischen Polyisocyanaten, Polyolen und Melamin-Formaldehyd-Vorkondensaten in Gegenwart von Katalysatoren und Treibmitteln sowie gegebenenfalls Kettenverlängerungs- oder Vernetzungsmitteln, Hilfsmitteln und Zusatzstoffen, dadurch gekennzeichnet, daß man als Melamin-Formaldehyd-Vorkondensate wäßrige Harzlösungen mit einem Melamin-Formaldehyd-Vorkondensatgehalt von 40 bis 85 Gew.-%, bezogen auf das Gesamtgewicht, verwendet, die erhalten werden durch Kondensation von Melamin mit Formaldehyd im Molverhältnis 1 : 1,1 bis 1,75 in wäßriger Lösung bei zumindest zeitweise einem pH-Wert von größer als 8 und bei Temperaturen von 60 bis 130 °C bis zu einer Wasserverdünnbarkeit bei 20 °C von 1 : 0,5 bis 4.

2. Verfahren nach Anspruch 1, dadurch gekennzeichnet, daß man vor, während oder nach der Melamin-Formaldehyd-Kondensation Stabilisierungsmittel zur Verbesserung der Lagerstabilität der erhaltenen Melamin-Formaldehyd-Vorkondensate zusetzt.

3. Verfahren nach den Anspruch 1, dadurch gekennzeichnet, daß das Melamin Formaldehyd-Molverhältnis 1 : 1,5 bis 1,65 beträgt.

4. Verfahren nach Anspruch 1, dadurch gekennzeichnet, daß als organische Polyisocyanate aromatische Polyisocyanate verwendet werden.

5. Verfahren nach Anspruch 1, dadurch gekennzeichnet, daß als organische Polyisocyanate Isocyanatgruppenhaltige Präpolymere aus Polyolen und aromatischen Polyisocyanaten mit NCO-Gehalten von 3 bis 35 Gew.-% verwendet werden.

6. Verfahren nach Anspruch 4, dadurch gekennzeichnet, daß als aromatische Polyisocyanate 2,4- und 2,6-Toluylendiisocyanat sowie die entsprechende Isomerengemische, 2,2'-, 2,4'- und 4,4'-Diphenylmethandiisocyanat sowie die entsprechenden Isomerengemische, Gemische aus 2,2'-, 2,4'-, 4,4'-Diphenylmethandiisocyanat und Polyphenyl-polymethylen-polyisocyanaten und Mischungen der genannten aromatischen Polyisocyanate verwendet werden.

7. Verfahren nach Anspruch 1, dadurch gekennzeichnet, daß pro 100 Gew.-Teile der wäßrigen 40 bis 85 gew.-%igen Melamin-Formaldehyd-Vorkondensatlösung 1 bis 50 Gew.-Teile Polyol verwendet werden.

8. Verfahren nach Anspruch 1, dadurch gekennzeichnet, daß man als Treibmittel ausschließlich Wasser verwendet.

9. Verfahren nach Anspruch 1, dadurch gekennzeichnet, daß man die Ausgangsstoffe nach dem Zweikomponenten-Verfahren zur Reaktion bringt, wobei die lagerstabile A-Komponente enthält :

Melamin-Formaldehyd-Vorkondensate, Wasser, mindestens einen basischen Polyurethankatalysator, gegebenenfalls Polyole, saure Kondensationskatalysatoren, physikalisch wirkende Treibmittel, Kettenverlängerungs- oder Vernetzungsmittel, Hilfsmittel und Zusatzstoffe und einen pH-Wert größer als 7 aufweist
und die B-Komponente enthält :

Polyisocyanate oder Isocyanatgruppen-haltige Präpolymere, gegebenenfalls physikalisch wirkende Treibmittel, Hilfsmittel und Zusatzstoffe.

**Claims**

1. A process for the preparation of polyurethane foams by reacting organic polyisocyanates, polyols and melamine-formaldehyde precondensates in the presence of catalysts and blowing agents and in the presence or absence of chain extenders or crosslinking agents, auxiliaries and additives, wherein the melamine-formaldehyde precondensates used are aqueous resin solutions which have a melamine-formaldehyde precondensate content of 40-85 % by weight, based on the total weight, and which are obtained by condensing melamine with formaldehyde, in a molar ratio of 1 : 1.1-1.75, in aqueous solution at a pH which is, at least periodically, above 8, and at from 60 to 130 °C, until the water-dilutability of the product, at 20 °C, is 1 : 0.5-4.

2. A process as claimed in claim 1, wherein a stabilizer for improving the shelf life of the melamine-formaldehyde precondensate is added before, during or after the condensation of the melamine with the formaldehyde.

3. A process as claimed in claim 1, wherein the molar ratio of melamine to formaldehyde ist 1 : 1.5-1.65.

4. A process as claimed in claim 1, wherein the organic polyisocyanates used are aromatic polyisocyanates.

5. A process as claimed in claim 1, wherein the organic polyisocyanates used are prepolymers which contain isocyanate groups, have NCO contents of from 3 to 35 % by weight, and are obtained from polyols and aromatic polyisocyanates.

6. A process as claimed in claim 4, wherein the aromatic polyisocyanates used are 2,4- and 2,6-toluylene diisocyanate or a corresponding isomer mixture, 2,2'-, 2,4'- and 4,4'-diphenylmethane diisocyanate or a corresponding isomer mixture, a mixture of 2,2'-, 2,4'- and 4,4'-diphenylmethane diisocyanate and polyphenyl-polymethylene polyisocyanates or a mixture of all the aromatic polyisocyanates mentioned.

7. A process as claimed in claim 1, wherein from 1 to 50 parts by weight of polyol are used per 100 parts by weight of the aqueous 40-85 % strength by weight melamine-formaldehyde precondensate solution.

8. A process as claimed in claim 1, wherein water is used as the sole blowing agent.

9. A process as claimed in claim 1, wherein the starting materials are reacted by the two-component process,

the storage-stable A-component containing melamine-formaldehyde precondensates, water, one or more basic polyurethane catalysts, and optional polyols, acid condensation catalysts, physical blowing agents, chain extenders or crosslinking agents, auxiliaries and additives, and having a pH of above 7, and

the B-component containing polyisocyanates or prepolymers containing isocyanate groups, and optional physical blowing agents, auxiliaries and additives.

## Revendications

1. Procédé de préparation de mousses de polyuréthanne par la réaction de polyisocyanates organiques, de polyols et de précondensats de mélamine et de formaldéhyde en présence de catalyseurs et d'agents porogènes, ainsi qu'éventuellement d'agents d'allongement des chaînes ou d'agents de réticulation, d'adjuvants et d'additifs, caractérisé en ce que l'on emploie comme pré-condensats de mélamine et de formaldéhyde des solutions aqueuses de résines avec une teneur en pré-condensat mélamine-formaldéhyde de 40 à 85 % en poids par rapport au poids total, celles-ci étant obtenues par une condensation de la mélamine et de l'aldéhyde formique dans un rapport molaire de 1 : 1,1 à 1,75, en solution aqueuse, à des températures comprises entre 60 et 130 °C, la solution possédant au moins passagèrement un pH supérieur à 8, jusqu'à une diluabilité dans l'eau, à 20 °C, de 1 : 0,5 à 4.

2. Procédé suivant la revendication 1, caractérisé en ce que l'on incorpore avant, pendant ou après la condensation de la mélamine et du formaldéhyde des stabilisants destinés à améliorer la stabilité au stockage des pré-condensats mélamine-formaldéhyde.

3. Procédé suivant la revendication 1, caractérisé en ce que le rapport molaire entre la mélamine et l'aldéhyde formique est compris entre 1 : 1,5 et 1 : 1,65.

4. Procédé suivant la revendication 1, caractérisé en ce que l'on emploie comme polyisocyanates organiques des polyisocyanates aromatiques.

5. Procédé suivant la revendication 1, caractérisé en ce que l'on emploie comme polyisocyanates organiques des pré-polymères à groupes isocyanate de polyols et de polyisocyanates aromatiques avec des teneurs en groupes —NCO de 3 à 35 % en poids.

6. Procédé suivant la revendication 4, caractérisé en ce que les polyisocyanates aromatiques sont choisis parmi le diisocyanate-2,4 et le diisocyanate-2,6 de toluylène et les mélanges d'isomères correspondants, le diisocyanate de diphényl-2,2', -2,4' et 4,4' méthane et les mélanges d'isomères correspondants, les mélanges de diisocyanates de diphényl-2,2', -2,4' et -4,4' méthane et de polyisocyanates de polyphényl-polyméthylène et les mélanges des polyisocyanates énumérés.

7. Procédé suivant la revendication 1, caractérisé en ce que l'on emploie 1 à 50 parties en poids de polyol pour 100 parties en poids d'une solution aqueuse d'une teneur en pré-condensat de mélamine et de formaldéhyde de 40 à 85 % en poids.

8. Procédé suivant la revendication 1, caractérisé en ce que l'eau est le seul agent porogène utilisé.

9. Procédé suivant la revendication 1, caractérisé en ce que l'on fait réagir les matières de départ selon le principe d'une réaction à deux composants, dont

le composant A, stable au stockage, comprend les pré-condensats mélamine-formaldéhyde, l'eau, au moins un catalyseur basique pour la formation de polyuréthannes, éventuellement des polyols, des catalyseurs de condensation acides, des agents porogènes à effet physique, des agents d'allongement des chaînes ou des agents de réticulation, d'autres additifs et adjuvants, et possède un pH supérieur à 7, tandis que

le composant B contient des polyisocyanates ou des prépolymères à groupes isocyanate et éventuellement des agents porogènes à effet physique, des additifs et des adjuvants.